# EUROPÄISCHE PATENTSCHRIFT

(11) **EP 3 244 695 B1**
(45) Veröffentlichungstag und Bekanntmachung des Hinweises auf die Patenterteilung: **29.07.2020**
(21) Anmeldenummer: 17168211.5
(22) Anmeldetag: 26.04.2017
(51) Int. Cl.: H05B 6/64, H05B 6/70

(54) **GARGERÄT UND VERFAHREN ZUM BETREIBEN**
COOKING DEVICE AND METHOD FOR OPERATING SAME
APPAREIL DE CUISSON ET PROCÉDÉ DE FONCTIONNEMENT

(30) Priorität: 09.05.2016 DE 102016108542
(43) Veröffentlichungstag der Anmeldung: 15.11.2017
(73) Patentinhaber: Miele & Cie. KG, 33332 Gütersloh (DE)
(72) Erfinder: Scharmann, Jürgen, 33442 Herzebrock-Clarholz (DE); Ziethen, Alexandrine, 59558 Lippstadt (DE)

(56) Entgegenhaltungen:
- WO-A1-2012/066419
- DE-A1-102008 016 824
- DE-A1-102012 006 578
- DE-A1-102014 113 664

## Beschreibung

Die vorliegende Erfindung betrifft ein Verfahren zum Betreiben eins Gargerätes laut dem Oberbegriff des Anspruchs 1 und ein Gargerät laut dem Oberbegriff des Anspruchs 8.

Bei Gargeräten mit einem geschlossenen Garraum können Lebensmittel mit verschiedenen thermischen Garmethoden und auch mit Hochfrequenzstrahlung, insbesondere mit Mikrowellenstrahlung, zubereitet werden. Dabei können die einzelnen Garmethoden alleine oder auch in einem Kombibetrieb verwendet werden.

Insbesondere bei der Verwendung von Hochfrequenzstrahlung ist der Wirkungsgrad der eingestellten Leistung jedoch nur schwer abzuschätzen. Die in den Garraum eingeleitete Hochfrequenzstrahlung geht nur zu einem gewissen Anteil als Energie in das Lebensmittel über. Der restliche Anteil der Hochfrequenzstrahlung wird reflektiert oder geht schon vor dem Auftreffen auf das Lebensmittel beispielsweise durch Transmission verloren.

Dabei kommt es bei dem Eintrag an Energie bzw. bei der Reflexion der Hochfrequenzstrahlung sehr auf das Lebensmittel an. Hierbei spielen die Art des Lebensmittels als solche, der Wasseranteil, die Größe, die Form und weitere Eigenschaften eine nicht unerhebliche Rolle. Beispielsweise reflektieren gefrorene Lebensmittel mehr Hochfrequenzstrahlung als aufgetaute Lebensmittel.

Somit entspricht die von einem Benutzer eingestellte Kombination von Leistung an Hochfrequenzstrahlung und Zeit nicht der effektiven Energiemenge, die während eines Garvorgangs in das Lebensmittel eingeht. Zudem verändert sich der Wirkungsgrad der eingeleiteten Hochfrequenzstrahlung teils erheblich während eines Garvorgangs, beispielsweise, wenn der Garvorgang mit einem tiefgefrorenen Lebensmittel begonnen wird. Die WO2012/066419 A1 beschreibt ein maschinenlesbares Element und einen optischen Indikator zur Authentifikation eines Teils vor seiner Behandlung. Als Teil kann ein Lebensmittel gemeint sein, die Behandlung kann in Form von Kochen mittels elektromagnetischer Energie erfolgen. Dabei ist ein Detektor vorgesehen, mit dem die in das Lebensmittel eingebrachte oder die reflektierte Strahlung gemessen werden kann.

Aus der DE 102008016824 A1 ist ein Verfahren zum Automatisieren eines Garverlaufs in einem Gargerät bekannt. Dabei wird beim ersten Durchführen eines automatisierten Garverlaufs eine für den Energieeintrag in das Gargut charakteristische Größe zu einer Vielzahl von Zeitpunkten gespeichert. Bei einem nächsten Garverlauf mit veränderter Beschickung wird zunächst ein Parameter erfasst, der Rückschlüsse auf die veränderte Beschickung zulässt, und dann der Energieeintrag angepasst. Mit Energieeintrag ist eine Anpassung der Garraumtemperatur gemeint.

Gegenstand der DE 102014113664 A1 ist ein Gargerät, in dem unter anderem eine Strahlungsquelle zum Garen des Garguts genutzt wird. Gemäß Anspruch 1 wird ein optischer Parameter des Garguts erfasst und davon abhängig die Leistung der Strahlungsquelle angesteuert. Im Absatz [0011] ist zwar von der Einstellung einer Energiemenge die Rede, dabei wird jedoch nicht berücksichtigt, dass das Gargut einen Teil der von der Strahlungsquelle erzeugten Energie gar nicht aufnimmt, sondern reflektiert und dass ein anderer Teil der Energie nicht vom Gargut, sondern vom Garraum absorbiert wird.

Es ist daher die Aufgabe der vorliegenden Erfindung, einem Benutzer die Möglichkeit zu bieten, den Wirkungsgrad des Hochfrequenzerzeugers für einen Garvorgang möglichst optimal einzustellen.

Diese Aufgabe wird gelöst durch ein Verfahren zum Betreiben eines Gargerätes mit den Merkmalen des Anspruchs 1 und durch ein Gargerät mit den Merkmalen des Anspruchs 8.

Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Verfahren eignet sich zum Betreiben eines Gargerätes mit wenigstens einem Garraum, in welchem Gargut wenigstens mittels Hochfrequenzstrahlung erhitzbar ist. Dabei wird zu jedem Garvorgang wenigstens ein Parameter eingestellt, wobei erfindungsgemäß als Parameter der in das Gargut einzubringende Energieeintrag eingestellt wird.

Dabei ist erfindungsgemäß unter einem Parameter insbesondere ein Programmparameter zu verstehen, über welchen ein Garvorgang definiert wird. Dabei können herkömmlicherweise als Parameter vorzugsweise die Garzeit bzw. die Gardauer, die Leistung, die zu verwendende Garmethode und/oder andere Programmparameter eingestellt werden. Erfindungsgemäß wird als Parameter für einen Garvorgang jedoch alleine oder zusätzlich zu anderen Parametern der tatsächlich in das Gargut einzubringende Energieeintrag eingestellt wird.

Dabei ist der in das Gargut während eines Garvorgangs einzubringender Energieeintrag erfindungsgemäß insbesondere auf die Hochfrequenzstrahlung bezogen. Dann wird eingestellt, wie viel Hochfrequenzstrahlung tatsächlich von dem Gargut absorbiert werden soll. In der Regel wird ein gewisser Anteil an in den Garraum eingebrachter Hochfrequenzstrahlung reflektiert und wird somit nicht als Energie in das Gargut eingebracht. Da erfindungsgemäß nicht eine einzubringende Leistung eingestellt wird, sondern die tatsächlich in ein Gargut eingetragene Energie, wird ein Verfahren bereitgestellt, bei welchem ein Garprozess mit einem genau definierten Energieeintrag durchgeführt werden kann.

Unter Hochfrequenzstrahlung ist erfindungsgemäß insbesondere Mikrowellenstrahlung zu verstehen, beispielsweise Strahlung, die durch ein Magnetron durch einen Solid-State-Mikrowellenerzeuger bzw. -Hochfrequenzerzeuger bereitgestellt wird.

Um die tatsächlich in das Gargut eingebrachte Energiemenge zu ermitteln, stellt das für das Verfahren verwendete Gargerät insbesondere Mittel zur Verfügung, die dazu geeignet und ausgebildet sind, das Maß der Absorption an Hochfrequenzstrahlung durch das Lebensmittel zu ermitteln. Dabei kann der Energieeintrag in das Gargut vorzugsweise direkt ermittelt bzw. gemessen werden. Dann können insbesondere die Absorptionseigenschaften des gerade verwendeten Garguts direkt gemessen werden.

In anderen Ausgestaltungen zur Ermittlung des tatsächlichen Energieeintrags in ein Lebensmittel wird vorzugsweise zusätzlich oder ausschließlich die Reflexion der eingebrachten Hochfrequenzstrahlung ermittelt bzw. gemessen. So kann aufgrund der gemessenen Reflexion der eingebrachten Hochfrequenzstrahlung auf das Absorptionsverhalten des Garguts geschlossen werden.

Dabei werden vorzugsweise weitere Verlustparameter bei der Ermittlung des tatsächlichen Energieeintrages berücksichtigt. So ist es insbesondere bei der Verwendung von Antennen zum Einbringen von Hochfrequenzstrahlung und/oder zum Messen der Reflexion zweckmäßig, wobei dann neben der Reflexion von Hochfrequenzstrahlung insbesondere auch die Transmission in eine Antenne zu berücksichtigen ist. So können möglichst genaue Werte für den tatsächlich eingebrachten Energieeintrag in das Gargut bereitgestellt werden.

Der tatsächlich einzubringende Energieeintrag ist als eine bestimmte Leistung pro Zeiteinheit definiert und kann vorzugsweise in Joule (J oder kJ) oder in Wattsekunden (Ws) angegeben bzw. eingestellt werden.

Um einem Benutzer abseits von im täglichen Gebrauch eher ungewöhnlichen Einheiten wie Joule und Wattsekunden eine griffigere Einstellmöglichkeit zu geben, kann der einzubringende Energieeintrag vorzugsweise auch über einen abgeleiteten Kochparameter eingestellt werden. So kann beispielsweise ein Energieeintrag von 200 kJ über einen abstrakten Kochparameter dargestellt werden, wobei hier beispielsweise für 200 kJ die Verwendung von 20 Gourmet-Units bzw. Gourmet-Einheiten verwendet werden kann. Der einzustellende Energieeintrag für ein optimales Garergebnis kann dann insbesondere und beispielhaft für bestimmte Lebensmittelklassen und gewichtsabhängig Gewicht spezifisch in einer Tabelle hinterlegt sein. So kann ein Benutzer beispielsweise über das Lebensmittel, das Gewicht und den Zustand des Lebensmittels, beispielsweise "gefroren" oder "aufgetaut" oder "raumtemperiert", eine entsprechende Einstellung für den Energieeintrag aus einer Liste bzw. Tabelle ablesen und die Einstellung vornehmen.

Das erfindungsgemäße Verfahren zum Betreiben eines Gargerätes bietet viele Vorteile. Ein erheblicher Vorteil ist, dass im Vergleich zu herkömmlichen Gargeräten mit einem Hochfrequenzerzeuger für einen Garvorgang eine tatsächlich von dem Gargut aufzunehmende Energiemenge eingestellt wird, sodass nicht nur eine in den Garraum eingebrachte Leistung pro Zeiteinheit betrachtet wird, sondern die tatsächlich von dem Gargut aufgenommene Energiemenge.

Dadurch können genauere Garergebnisse erzielt werden, da die Menge an absorbierter Energie zwischen Lebensmitteln und je nach Zustand des Lebensmittels, beispielsweise ob ein Lebensmittel gefroren oder aufgetaut ist, unter Umständen erheblich variiert.

Bevorzugt wird der Energieeintrag in das Gargut gemessen. Dazu werden insbesondere die Reflexion der eingebrachten Hochfrequenzstrahlung und/oder weitere Verlustparameter ermittelt, gemessen und/oder bestimmt und/oder es wird das Absorptionsverhalten des Gargut direkt gemessen bzw. bestimmt. Dadurch ist vorzugsweise zu jedem Zeitpunkt eines Garvorgangs bekannt, wieviel Energie bereits von einem Lebensmittel aufgenommen wurde.

Bevorzugt ist zum Einleiten von Hochfrequenzstrahlung wenigstens eine Leistungsphase vorgesehen und zum Ermitteln der Reflexion der Hochfrequenzstrahlung ist wenigstens eine Messphase vorgesehen, wobei die Leistungsphase und die Messphase wenigstens zeitweise parallel und/oder nacheinander vorgesehen sind. Ein derartiges Verfahren kann insbesondere bei der Verwendung von wenigstens einer Antenne zum Einleiten von Hochfrequenzstrahlung in den Garraum vorteilhaft eingesetzt werden. In zweckmäßigen Ausgestaltungen können auch zwei oder mehr Antennen zum Messen und/oder Einleiten von Energie verwendet werden. Bevorzugt wird bei der Verwendung von wenigstens einer Antenne in einer relativ kurzen Messphase Hochfrequenzstrahlung insbesondere mit einer geringen Intensität in den Garraum eingebracht und die Reflexion wird gemessen. In einer zweckmäßig längeren Leistungsphase wird dann Hochfrequenzstrahlung mit einer mit einer vorbestimmten Leistung in den Garraum eingebracht, um das Gargut zu garen. Je nach Ausgestaltung kann die Messphase bei der Verwendung von wenigstens einer Antenne zum Einleiten von Hochfrequenzstrahlung in den Garraum auch parallel zur Leistungsphase stattfinden. Dabei ist jedoch insbesondere bei der Verwendung von zwei oder mehr Antennen zu berücksichtigen, dass für besonders genaue Ergebnisse vorzugsweise die Transmission der Strahlung in andere Antennen als Verlustparameter berücksichtigt werden sollte. Um bei der Verwendung von einer Antenne bzw. von Antennen die reflektierte Energie zu bestimmten, wird die in eine Antenne zurück reflektierte Energie vorzugsweise von einem dafür vorgesehen Bauteil in Wärme umgesetzt, worüber der Grad der Reflexion bestimmt wird. Je nach Ausgestaltung des verwendeten Gargerätes können eine Messphase und eine Leistungsphase auch bei der Verwendung eines Magnetrons vorgesehen sein, wobei die Leistung dann über einen Welllenkanal in den Garraum eingeleitet wird.

Es erfolgt eine Statusanzeige über den noch verbleibenden Energieeintrag. Bei derartigen Ausgestaltungen ist es unter anderem bevorzugt, dass beispielsweise ein Statusbalken vorgesehen ist, der den steigenden Energieeintrag graphisch darstellt, wobei sich der Statusbalken insbesondere sich je nach Ausgestaltung bei steigendem Energieeintrag immer weiter füllt.

In zweckmäßigen Ausgestaltungen wird aus dem verbleibenden Energieeintrag die Restzeit des Garvorgangs ermittelt und angezeigt. So kann insbesondere aus dem Verlauf der Energieabsorption eine Vorhersage über das Garzeitende getroffen werden, sodass ein Benutzer besonders komfortabel das Gargerät bedienen kann.

Vorzugsweise wird wenigstens ein Automatikprogramm verwendet, wobei in wenigstens einer Tabelle ein Energieeintrag zu einem bestimmten Lebensmittel hinterlegt ist. So wird beispielsweise in einer Programmunterstützung bzw. in einem Assistenzablauf einem Benutzer die Möglichkeit gegeben, für einen bestimmten Garvorgang als Parameter die einzubringende Energiemenge einzustellen.

Besonders bevorzugt wird wenigstens ein weiterer prozessbegrenzender Parameter eingestellt. Dabei ist unter einem prozessbegrenzenden Parameter ein solcher Parameter erfindungsgemäß definiert, der unabhängig von sonst eingestellten Parametern den Garprozess beendet bzw. abbricht, sobald der für den prozessbegrenzenden Parameter eingestellte Wert erreicht ist. So kann beispielsweise eine definierte Garzeit oder die gewünschte Kerntemperatur eingestellt werden, sodass beim Erreichen des eingestellten Wertes für einen derartigen prozessbegrenzenden Parameter der Garvorgang automatisch beendet bzw. abgebrochen bzw. unterbrochen wird. Dabei wird insbesondere nachgefragt, ob die noch nicht eingebrachte Energie trotz des Erreichens eines prozessbegrenzenden Parameters weiter zugeführt werden soll. Eine derartige Funktion dient insbesondere auch als Sicherheitsfunktion, falls ein Benutzer versehentlich eine falsche Eingabe zu dem einzubringenden Energieeintrag gemacht hat.

In zweckmäßigen Ausgestaltungen ist der Garraum zusätzlich mit wenigstens einer thermischen Heizmethode beheizbar und es wird ein Kombinationsbetrieb eingestellt. Dass der Garraum zusätzlich mit einer thermischen Heizmethode beheizbar ist, heißt erfindungsgemäß insbesondere, dass der Garraum beispielsweise mittels eines Heißluftbetriebs, Ober- und/oder Unterhitze und/oder Dampf beheizbar ist. So kann ein in dem Garraum befindliches Gargut zusammen mit der Hochfrequenzstrahlung in einem Kombibetrieb zusätzlich zu der Hochfrequenzstrahlung auch thermisch beheizt werden.

Bevorzugt wird die Hochfrequenzstrahlung mittels wenigstens eines Magnetrons und/oder mittels wenigstens eines Solid-State-Hochfrequenzerzeugers erzeugt. Dabei wird mittels des Magnetrons und/oder des Solid-State-Hochfrequenzerzeugers insbesondere Mikrowellenstrahlung erzeugt, die in den Garraum eingeleitet wird. Unter einem Solid-State-Hochfrequenzerzeuger ist dabei insbesondere ein Leistungshalbleiter mit einer geeigneten Antenne zu verstehen.

Das erfindungsgemäße Gargerät umfasst wenigstens einen Garraum, wenigstens einen Hochfrequenzerzeuger, der dazu geeignet und ausgebildet ist Hochfrequenzstrahlung in den Garraum einzuleiten und wenigstens eine Messvorrichtung zur Ermittlung des Absorptionsgrades der eingeleiteten Leistung zur Bestimmung des tatsächlichen Energieeintrags in ein Gargut. Dabei ist erfindungsgemäß wenigstens eine Bedieneinrichtung vorgesehen, über welche ein während eines Garvorgangs in das Gargut einzubringender Energieeintrag einstellbar ist.

Das erfindungsgemäße Gargerät ist dabei insbesondere derart ausgebildet, dass ein Verfahren damit ausgeführt werden kann, wie es zuvor beschrieben wurde.

Das erfindungsgemäße Gargerät bietet viele Vorteile. Ein erheblicher Vorteil ist, dass ein Benutzer nicht nur eine bestimmte Leistung und eine Leistungsdauer von einem Hochfrequenzerzeuger einstellen kann. Bei dem erfindungsgemäßen Gargerät ist es möglich, die tatsächlich in das Gargut einzubringende Energiemenge einzustellen, sodass ein besonders vorteilhaftes und gutes Garergebnis erreicht werden kann.

Dabei ist wenigstens eine Anzeigeeinrichtung vorgesehen, über welche der Energieeintrag anzeigbar ist. Dabei kann insbesondere der aktuelle Energieeintrag angezeigt werden. Es ist zudem in zweckmäßigen Ausgestaltungen möglich, den Verlauf des Energieeintrags entweder detailliert in einem Diagramm und/oder in einem Statusbalken anzuzeigen.

In besonders bevorzugten Ausgestaltungen sind wenigstens ein und insbesondere wenigstens zwei Antennen vorgesehen, über welche Hochfrequenzstrahlung zum Garen und/oder zum Messen des Energieeintrags in den Garraum einbringbar ist. Bei einer derartigen Ausgestaltung kann über die wenigstens zwei Antennen oder sogar über ein Antennenarray Hochfrequenzstrahlung in den Garraum eingeleitet werden. Dabei können Leistungsphasen und Messphasen bei den einzelnen Antennen nacheinander oder auch parallel vorgesehen sein. Bei der Verwendung von mehreren Antennen können das Einbringen von Leistung und das Messen jedoch vorzugsweise auch auf unterschiedliche Antennen aufgeteilt sein.

Allgemein ist wenigstens eine Auswerteeinrichtung vorgesehen, welche aus den gemessenen bzw. ermittelten Daten einen Energieeintrag bestimmt. Die Auswerteeinrichtung ist mit einer Steuereinrichtung verbunden, sodass der Garvorgang derart steuerbar ist, dass ein vorbestimmter Energieeintrag in das Gargut gewährleistet wird.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargerätes in einer Frontansicht;
- Figur 2: eine rein schematische Darstellung einer Menüebene auf der Anzeigeeinrichtung einer Bedieneinrichtung eines erfindungsgemäßen Gargerätes;
- Figur 3: eine rein schematische Darstellung weiterer Menüebenen auf der Anzeigeeinrichtung einer Bedieneinrichtung eines erfindungsgemäßen Gargerätes;
- Figur 4: eine rein schematische Darstellung weiter Einstellmöglichkeiten in Menüebenen auf der Anzeigeeinrichtung einer Bedieneinrichtung eines erfindungsgemäßen Gargerätes;
- Figur 5: eine rein schematische Darstellung weiter Einstellmöglichkeiten in Menüebenen auf der Anzeigeeinrichtung einer Bedieneinrichtung eines erfindungsgemäßen Gargerätes; und
- Figur 6: eine rein schematische Darstellung von Menüebenen eines weiteren Programmablaufs in auf der Anzeigeeinrichtung einer Bedieneinrichtung eines erfindungsgemäßen Gargerätes.

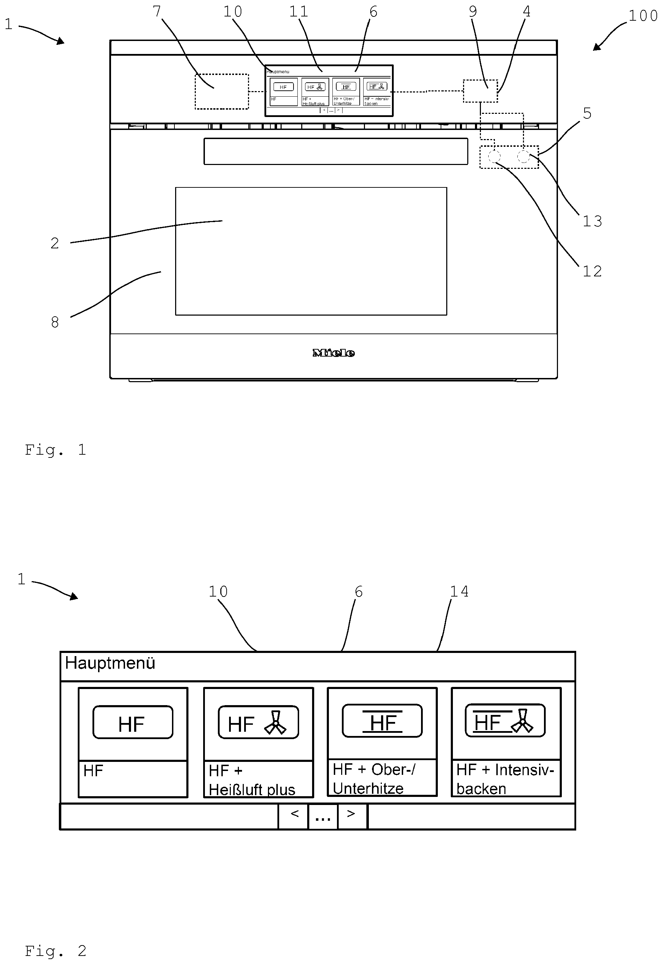

In Figur 1 ist rein schematisch ein erfindungsgemäßes Gargerät 1 dargestellt, welches einen Garraum 2 umfasst, in welchem Gargut zubereitet werden kann. Der Garraum 2 ist dabei in der gezeigten Ansicht von einer Garraumtür 8 verschlossen.

Zum Zubereiten von Speisen umfasst das Gargerät 1 unter anderem einen Hochfrequenzerzeuger 4, welcher dazu geeignet und ausgebildet ist, Hochfrequenzstrahlung in den Garraum 2 einzuleiten. Dabei ist der Hochfrequenzerzeuger in dem gezeigten Ausführungsbeispiel als Solid-State-Hochfrequenzerzeuger 9 ausgebildet, welcher hier einen Leistungshalbleiter eine geeignete Antenne 12, 13 umfasst. In anderen Ausgestaltungen kann zum Einleiten von Hochfrequenzstrahlung bzw. von Mikrowellenstrahlung ein Magnetron verwendet werden.

Bei dem Gargerät 1 ist erfindungsgemäß eine Bedieneinrichtung 6 vorgesehen, über welche verschiedene Parameter zu einem Garvorgang eingestellt werden können. Die Bedieneinrichtung 6 umfasst in dem gezeigten Ausführungsbeispiel eine Anzeigeeinrichtung 10, wobei die Anzeigeeinrichtung hier als Touch-Display 11 vorgesehen ist.

So können als Parameter beispielsweise die Heiz- bzw. Garmethode, die Garzeit und/oder eine bestimmte Leistung und/oder Temperatur eingestellt werden. Erfindungsgemäß kann über die Bedieneinrichtung auch eingestellt werden, welcher Energieeintrag in ein Gargut während des Garvorgangs eingebracht werden soll.

Dazu ist bei dem erfindungsgemäßen Gargerät eine Messeinrichtung 5 vorgesehen, welche in dem gezeigten Ausführungsbeispiel in Wirkverbindung zu dem Hochfrequenzerzeuger 4 steht bzw. als Teil des Hochfrequenzerzeugers 4 ausgebildet ist.

Über die Messeinrichtung 5 kann das Maß der Absorption der in den Garraum 2 eingeleiteten Hochfrequenzstrahlung von dem Gargut ermittelt werden. So kann der tatsächliche Energieeintrag in das Gargut ermittelt werden, sodass nicht nur die eingeleitete Leistung an Hochfrequenzstrahlung über die Zeit bei dem Garvorgang berücksichtigt wird, sondern die tatsächlich in das Gargut eingebrachte Energie.

Um den tatsächlichen Energieeintrag zu bestimmen, ist in dem gezeigten Ausführungsbeispiel eine Auswerteeinrichtung 7 vorgesehen, welche in dem gezeigten Ausführungsbeispiel in Wirkverbindung zu der Bedieneinrichtung 6 bzw. zu dem Hochfrequenzerzeuger 4 steht.

Zur Ermittlung des tatsächlichen Energieeintrags sind in dem gezeigten Ausführungsbeispiel zwei Antennen 12, 13 vorgesehen, wobei bei der gezeigten Ausführungsform eine Antenne 12 zum Einbringen von Leistung vorgesehen ist und die Antenne 13 als Messantenne ausgebildet ist. Dabei sind die Antennen 12, 13 in dem gezeigten Ausführungsbeispiel dem Solid-State-Hochfrequenzerzeuger 9 und der Messeinrichtung 5 zugeordnet.

Über die Leistungsantenne 12 und die Messantenne 13 wird über teilweise parallel ausgeführte Messphasen und Leistungsphasen Hochfrequenzstrahlung in den Garraum 2 eingeleitet, wobei über die Reflexionen der Hochfrequenzstrahlung und über eine Verrechnung der Transmission der eingebrachten Hochfrequenzstrahlung in die andere Antenne der tatsächliche Energieeintrag in das Lebensmittel bestimmt wird.

In anderen vorteilhaften Ausgestaltungen können auch beide oder mehr als zwei Antennen 12, 13 zum Einleiten von Leistung und zum Messen der Reflexion vorgesehen sein. Auch bei einer derartigen Ausgestaltung kann zweckmäßig parallel zur Einleitung von Hochfrequenzstrahlung die Reflexion gemessen werden. Dabei sollte insbesondere bei der Verwendung von mehr als einer Antenne die Transmission der Reflexion in andere Antennen berücksichtigt werden. In anderen nicht gezeigten Ausgestaltungen kann auch nur eine Antenne zum Einleiten von Leistung und zum Messen der Reflexion vorgesehen sein.

In Figur 2 ist rein schematisch eine erste Menüebene 14 dargestellt, wie sie einem Benutzer auf der Anzeigeeinrichtung 10 der Bedieneinrichtung 6 dargestellt wird. Hier ist zu erkennen, dass das Gargerät 1 als Kombigargerät 100 ausgestaltet ist, bei welchen zusätzlich zu Hochfrequenzstrahlung oder auch ausschließlich mit thermischen Heizquellen der Garraum beheizt werden kann.

So sind unter anderem ein Heißluftbetrieb und ein Betrieb mit Ober- und/oder Unterhitze vorgesehen. Zweckmäßig ist in anderen Ausgestaltungen auch ein Beheizen des Garraumes 2 mit Dampf möglich. Jedoch kann das erfindungsgemäße Verfahren, bei dem der tatsächliche Energieeintrag in ein Lebensmittel eingestellt wird, nur bei einem Garvorgang verwendet werden, für welchen die Verwendung von Hochfrequenzstrahlung zum Erwärmen des Lebensmittels ausschließlich oder in Kombination mit anderen Garmethoden eingestellt ist.

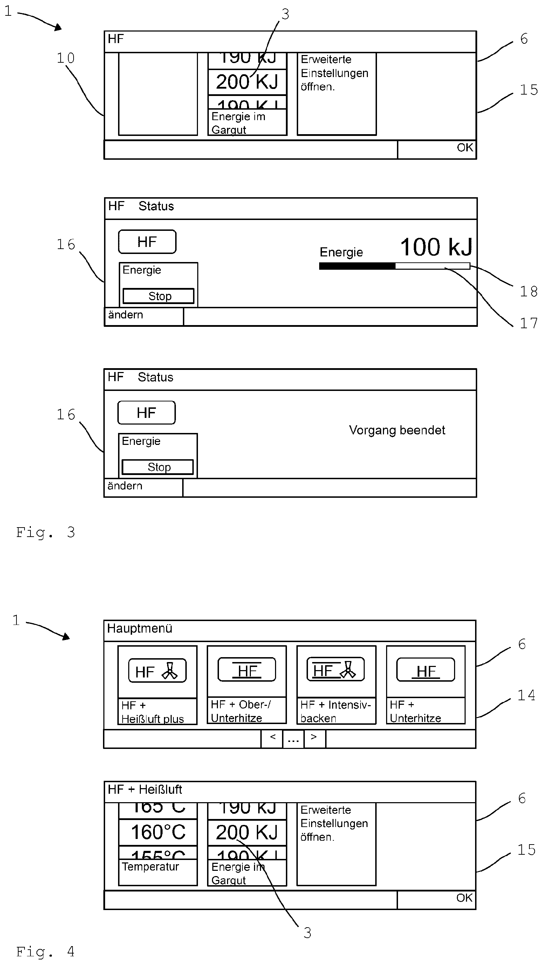

In Figur 3 ist rein schematisch eine zweite Menüebene 15 dargestellt, welche einem Benutzer angezeigt wird, wenn er in der ersten Menüebene 14 einen reinen Hochfrequenzbetrieb ausgewählt hat.

Hier kann ein Benutzer beispielsweise den tatsächlichen Energieeintrag 3 in das Gargut, beispielsweise 200 kJ, einstellen. Damit ein Benutzer den tatsächlichen Energieeintrag nicht über eine im alltäglichen Gebrauch nicht übliche Einheit einstellen muss, kann das Einstellen des tatsächlichen Energieeintrags je nach Ausgestaltung auch über einen frei definierten Kochparameter eingestellt werden. Dabei wird der tatsächliche Energieeintrag beispielsweise in Gourmet-Units eingestellt, wobei eine Gourmet-Unit einem bestimmten Wert in kJ oder Ws entspricht. So kann ein Benutzer einen abstrakten Wert zu einem bestimmten Energieeintrag einstellt. Ein derartiger Energieeintrag bzw. solche Kochparameter bzw. solche Gourmet-Units können vorzugsweise für bestimmte Produkte in einer Tabelle hinterlegt sein.

Unter der Menüebene 15 ist eine dritte Menüebene 16 dargestellt, welche nach Auswahl einer bestimmten einzubringen Energiemenge angezeigt wird. Hier wird noch einmal angezeigt, dass ein reiner Hochfrequenzbetrieb ausgewählt ist. Zudem wird eine Statusanzeige 17 angeboten, welchen den verbleibenden Energieeintrag anzeigt. Diese Statusanzeige 17 ist in dem gezeigten Ausführungsbeispiel als Statusbalken 18 ausgebildet, welcher sich je nach Fortschritt des Garguts bzw. der eingebrachten Energiemenge weiter füllt.

In der Menüebene 16 wird einem Benutzer weiterhin eine Start-/Stopp-Funktion angeboten, über welcher der Eintrag an Energie während eines Garvorgangs oder je nach Einstellung sogar der gesamte Garvorgang unterbrochen und/oder pausiert werden kann. So kann hier über eine entsprechende Bedienfläche "Stop" auf der Bedieneirichtung 6 der Energieeintrag 3 unterbrochen werden. Nach dem Betätigen der Bedienfläche "Stop" wird diese in eine Bedienfläche "Start" umgewandelt, über welche der Garvorgang bzw. in dem gezeigten Ausführungsbeispiel der Eintrag an Energie bzw. Hochfrequenzstrahlung fortgesetzt wird.

Die unterste Darstellung in Figur 3 zeigt die Anzeige auf der Bedieneinrichtung 6 bzw. auf der Anzeigeeinrichtung 10, sobald ein Garvorgang erfolgreich beendet wurde.

In Figur 4 sind erneut die Menüebenen 14 und 15 dargestellt, wobei der Benutzer in der Menüebene 14 einen Kombinationsbetrieb aus Hochfrequenzstrahlung und Heißluft gewählt hat. Zusätzlich zu dem einzubringenden Energieeintrag über Hochfrequenzstrahlung von 200 kJ ist eine Heißlufttemperatur von 160°C ausgewählt.

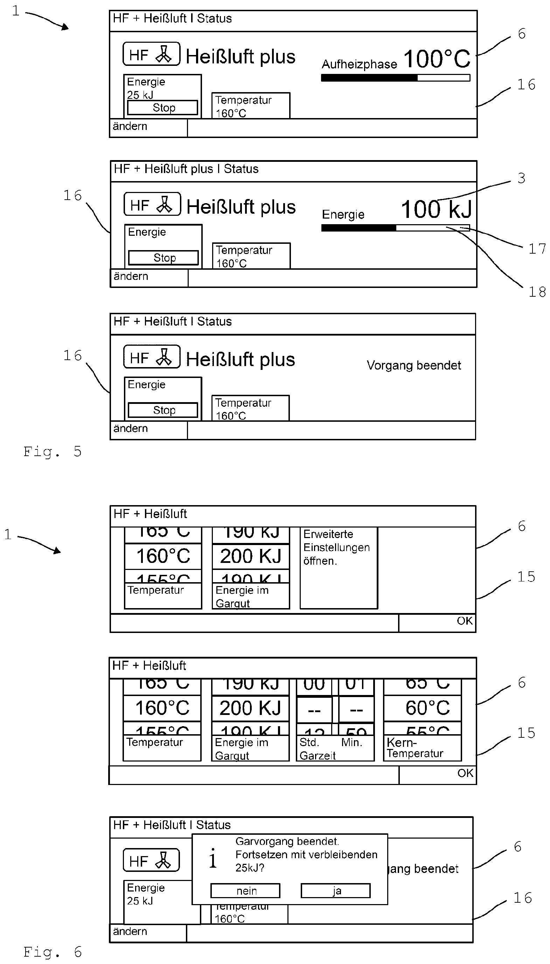

In Figur 5 sind drei Ansichten der Menüebenen 16 dargestellt, wobei in der obersten Darstellung die Garraumtemperatur in der auf Heizphase angezeigt wird. Sobald sie Garraumtemperatur die vorbestimmte Temperatur von 160°C erreicht hat, ändert sich die Anzeige derart, dass erneut der Energieeintrag über einen Statusbalken 18 dem Benutzer angezeigt wird.

In anderen Ausgestaltungen kann dieser Statusbalken auch in Form einer Restzeitanzeige angezeigt werden, wobei hier anhand des Verlaufs ist Energieeintrags eine Restzeit in Minuten und Sekunden ermittelt und angegeben wird.

In der untersten Darstellung ist erneut gezeigt, wie die Anzeige auf der Bedieneinrichtung 6 bzw. auf der Anzeigeeinrichtung 10 gestaltet ist, wenn der Garvorgang beendet ist.

In Figur 6 ist ein weiteres Ausführungsbeispiel eines möglichen Programmablaufs mit einem erfindungsgemäßen Gargerät 1 dargestellt. Dabei kann ein Benutzer in der zweiten Menüebene 15 weitere Einstellungsoptionen öffnen. Dies ist in der mittleren Ansicht dargestellt.

Hier kann beispielsweise ein weiterer prozessbegrenzender Parameter eingestellt werden. Hierunter zählen unter anderem die Garzeit oder auch die Kerntemperatur. Dabei ist zu erkennen, dass in der ganz rechten Spalte in der mittleren Darstellung die gewünschte Kerntemperatur auf 60°C eingestellt.

Das Einstellen eines derartigen prozessbeendenden Parameters führt dazu, dass auch vor Erreichen der einzubringen Energiemenge durch die Hochfrequenzstrahlung der Garvorgang abgebrochen bzw. unterbrochen wird, sobald der voreingestellte Wert für den prozessbeendenden Parameter erreicht ist.

So kann beispielsweise ein Übergaren eines Lebensmittels effektiv verhindert werden. Insbesondere wird hierdurch erreicht, dass ein Garvorgang auch dann mit dem gewünschten Garergebnis beendet wird, wenn sich der Benutzer beim Eingeben der einzubringen Energiemenge geirrt hat.

In der untersten Darstellung ist angedeutet, dass ein Benutzer bei einer Diskrepanz zwischen einzubringender Energiemenge und dem Erreichen eines Werts für einen prozessbegrenzenden Parameter gefragt wird, ob der Garvorgang beendet werden soll oder ob die verbleibende Energie dem Gargut dennoch zugeführt werden soll.

### Bezugszeichenliste

- 1: Gargerät
- 2: Garraum
- 3: Energieeintrag
- 4: Hochfrequenzerzeuger
- 5: Messmesseinrichtung
- 6: Bedieneinrichtung
- 7: Auswerteeinrichtung
- 8: Garraumtür
- 9: Solid-State Hochfrequenzerzeuger/ Magnetron
- 10: Anzeigeeinrichtung
- 11: Touch-Display
- 12: Antenne
- 13: Antenne
- 14: erste Menüebene
- 15: zweite Menüebene
- 16: dritte Menüebene
- 17: Statusanzeige
- 18: Statusbalken
- 100: Kombigargerät

## Patentansprüche

1. Verfahren zum Betreiben eins Gargerätes (1) mit wenigstens einem Garraum (2), in welchem Gargut wenigstens mittels Hochfrequenzstrahlung erhitzbar ist, wobei zu einem Garvorgang wenigstens ein Parameter eingestellt wird, wobei als Parameter der in das Gargut eingebrachte Energieeintrag (3) mittels einer Bedieneinrichtung (6) eingestellt wird, wobei eine Auswerteeinrichtung aus den gemessenen bzw. ermittelten Daten einen Energieeintrag bestimmt und wobei die Auswerteeinrichtung mit einer Steuereinrichtung verbunden ist, sodass der Garvorgang derart gesteuert wird, dass ein vorbestimmter Energieeintrag in das Gargut gewährleistet wird, **dadurch gekennzeichnet, dass** eine Statusanzeige über den noch verbleibenden Energieeintrag erfolgt.

2. Verfahren nach einem der vorhergehenden Ansprüche, **dadurch gekennzeichnet, dass** aus dem verbleibenden Energieeintrag die Restzeit ermittelt und angezeigt wird.

3. Verfahren nach einem der vorhergehenden Ansprüche, **dadurch gekennzeichnet, dass** ein Automatikprogramm verwendet wird, wobei in wenigstens einer Tabelle ein Energieeintrag in zu einem bestimmten Lebensmittel hinterlegt ist.

4. Verfahren nach einem der vorhergehenden Ansprüche, **dadurch gekennzeichnet, dass** zum Einleiten von Hochfrequenzstrahlung wenigstens eine Leistungsphase vorgesehen ist und dass zum Ermitteln der Reflexion der Hochfrequenzstrahlung wenigstens eine Messphase vorgesehen ist, wobei die Leistungsphase und die Messphase wenigstens zeitweise parallel und/oder nacheinander vorgesehen sind.

5. Verfahren nach einem der vorhergehenden Ansprüche, **dadurch gekennzeichnet, dass** wenigstens ein weiterer prozessbegrenzender Parameter eingestellt wird.

6. Verfahren nach einem der vorhergehenden Ansprüche, **dadurch gekennzeichnet, dass** der Garraum zusätzlich mit wenigstens einer thermischen Heizmethode beheizbar ist und dass ein Kombinationsbetrieb eingestellt wird.

7. Verfahren nach einem der vorhergehenden Ansprüche, **dadurch gekennzeichnet, dass** die Hochfrequenzstrahlung mittels wenigstens eines Magnetrons (9) und/oder mittels wenigstens eines Solid-State-Hochfrequenzerzeugers (9) erzeugt wird.

8. Gargerät (1) umfassend wenigstens einen Garraum (2), wenigstens einen Hochfrequenzerzeuger (9), der dazu geeignet und ausgebildet ist,
Hochfrequenzstrahlung in den Garraum (2) einzuleiten und wenigstens eine Messeinrichtung (5) zur Ermittlung des Absorptionsgrades der eingeleiteten Leistung zur Bestimmung des tatsächlichen Energieeintrags in ein Gargut, wobei wenigstens eine Bedieneinrichtung (6) über welche ein während eines Garvorgangs in ein Gargut einzubringender Energieeintrag einstellbar ist, wobei eine Auswerteeinrichtung vorgesehen ist, welche aus den gemessenen bzw. ermittelten Daten einen Energieeintrag bestimmt und wobei die Auswerteeinrichtung mit einer Steuereinrichtung verbunden ist, sodass der Garvorgang derart steuerbar ist, dass ein vorbestimmter Energieeintrag in das Gargut gewährleistet wird, **dadurch gekennzeichnet, dass** eine Statusanzeige über den noch verbleibenden Energieeintrag vorgesehen ist.

9. Gargerät nach Anspruch 10, **dadurch gekennzeichnet, dass** wenigstens eine Anzeigeeinrichtung (10) vorgesehen ist, über welche der Energieeintrag anzeigbar ist.

10. Gargerät nach Anspruch 11, **dadurch gekennzeichnet, dass** wenigstens eine Antenne (12) und insbesondere wenigstens zwei Antennen (12, 13) vorgesehen sind.

## Claims

1. Method for operating a cooking appliance (1) comprising at least one cooking chamber (2), in which food can be heated at least by means of high-frequency radiation, at least one parameter being set for a cooking process, the energy input (3) introduced into the food being set as the parameter by means of an operating device (6), an evaluation device determining an energy input from the measured or ascertained data, and the evaluation device being connected to a control device, so that the cooking process is controlled such that a predetermined energy input into the food is ensured, **characterised in that** the status of the remaining energy input is displayed.

2. Method according to the preceding claim, **characterised in that** the remaining time is ascertained from the remaining energy input and displayed.

3. Method according to either of the preceding claims, **characterised in that** an automatic program is used, an energy input into a certain foodstuff being stored in at least one table.

4. Method according to any of the preceding claims, **characterised in that** at least one power phase is provided for introducing high-frequency radiation, and **in that** at least one measuring phase is provided for ascertaining the reflection of the high-frequency radiation, the power phase and the measuring phase being provided at least temporarily in parallel and/or successively.

5. Method according to any of the preceding claims, **characterised in that** at least one further process-limiting parameter is set.

6. Method according to any of the preceding claims, **characterised in that** the cooking chamber can additionally be heated by means of at least one thermal heating method, and **in that** a combined operation is set.

7. Method according to any of the preceding claims, **characterised in that** the high-frequency radiation is generated by means of at least one magnetron (9) and/or by means of at least one solid-state high-frequency generator (9).

8. Cooking appliance (1) comprising at least one cooking chamber (2), at least one high-frequency generator (9) which is suitable and designed to introduce high-frequency radiation into the cooking chamber (2), and at least one measuring device (5) for ascertaining the degree of absorption of the introduced power in order to determine the actual energy input into a food, at least one operating device (6) being provided, by means of which an energy input to be introduced into a food during a cooking process can be set, an evaluation device being provided which determines an energy input from the measured or ascertained data, and the evaluation device being connected to a control device, so that the cooking process can be controlled such that a predetermined energy input into the food is ensured, **characterised in that** a status display is provided for the remaining energy input.

9. Cooking appliance according to claim 10, **characterised in that** at least one display device (10) is provided, by means of which the energy input can be displayed.

10. Cooking appliance according to claim 11, **characterised in that** at least one antenna (12) and in particular at least two antennas (12, 13) are provided.

## Revendications

1. Procédé pour faire fonctionner un appareil de cuisson (1) comportant au moins une chambre de cuisson (2) dans laquelle les aliments à cuire peuvent être chauffés au moins au moyen d'un rayonnement haute fréquence, au moins un paramètre étant défini pour un processus de cuisson,
l'apport d'énergie (3) dans l'aliment à cuire étant défini comme paramètre au moyen d'un dispositif de commande (6), un dispositif d'évaluation déterminant un apport d'énergie à partir des données mesurées ou recueillies, et le dispositif d'évaluation étant relié à un dispositif de contrôle, de sorte que le processus de cuisson est contrôlé de manière à garantir un apport d'énergie prédéterminé dans l'aliment à cuire, **caractérisé en ce qu'**un état est affiché concernant l'apport d'énergie restant.

2. Procédé selon l'une des revendications précédentes, **caractérisé en ce que** le temps restant est déterminé et affiché à partir de l'apport d'énergie restant.

3. Procédé selon l'une quelconque des revendications précédentes, **caractérisé en ce qu'**un programme automatique est utilisé, un apport d'énergie dans un aliment donné étant consigné dans au moins un tableau.

4. Procédé selon l'une des revendications précédentes, **caractérisé en ce qu'**au moins une phase de puissance est prévue pour initier un rayonnement haute fréquence, et **en ce qu'**au moins une phase de mesure est prévue pour déterminer la réflexion du rayonnement haute fréquence, la phase de puissance et la phase de mesure étant prévues au moins temporairement en simultané et/ou de manière successive.

5. Procédé selon l'une des revendications précédentes, **caractérisé en ce qu'**au moins un autre paramètre de délimitation de processus est défini.

6. Procédé selon l'une des revendications précédentes, **caractérisé en ce que** la chambre de cuisson peut en outre être chauffée par au moins une méthode de chauffage thermique, et **en ce qu'**une fonction combinée est définie.

7. Procédé selon l'une des revendications précédentes, **caractérisé en ce que** le rayonnement haute fréquence est généré au moyen d'au moins un magnétron (9) et/ou au moyen d'au moins un générateur haute fréquence à l'état solide (9).

8. Appareil de cuisson (1) comprenant au moins une chambre de cuisson (2), au moins un générateur haute fréquence (9) adapté et conçu pour envoyer un rayonnement haute fréquence dans la chambre de cuisson (2), et au moins un dispositif de mesure (5) pour déterminer le degré d'absorption de la puissance envoyée afin de déterminer l'apport d'énergie réel dans un aliment à cuire,
au moins un dispositif de commande (6) par lequel un apport d'énergie à introduire dans un aliment à cuire pendant un processus de cuisson peut être défini, un dispositif d'évaluation étant prévu, lequel détermine un apport d'énergie à partir des données mesurées ou déterminées, le dispositif d'évaluation étant relié à un dispositif de contrôle, de sorte que le processus de cuisson puisse être contrôlé de manière à garantir un apport d'énergie prédéterminé dans l'aliment à cuire, **caractérisé en ce qu'**un état est affiché concernant l'apport d'énergie restant.

9. Appareil de cuisson selon la revendication 10, **caractérisé en ce qu'**au moins un dispositif d'affichage (10) est prévu pour l'affichage de l'apport d'énergie.

10. Appareil de cuisson selon la revendication 11, **caractérisé en ce qu'**au moins une antenne (12) et notamment au moins deux antennes (12, 13) sont prévues.
